# EUROPÄISCHE PATENTSCHRIFT

(11) **EP 0 883 867 B1**
(45) Veröffentlichungstag und Bekanntmachung des Hinweises auf die Patenterteilung: **15.03.2000**
(21) Anmeldenummer: 96934503.2
(22) Anmeldetag: 30.09.1996
(51) Int. Cl.: G07G 1/00, G01G 19/414

(54) **WAAGE FÜR VERKAUFSGESCHÄFTE**
SCALES FOR RETAIL OUTLETS
BALANCE POUR POINTS DE VENTE

(30) Priorität: 22.02.1996 DE 9600278 U
(43) Veröffentlichungstag der Anmeldung: 16.12.1998
(73) Patentinhaber: Siemens Nixdorf Informationssysteme AG, 33106 Paderborn (DE)
(72) Erfinder: BAITZ, Günter, D-13503 Berlin (DE); BURCHART, Joachim, D-33189 Schlangen (DE); KAMIN, Hartmut, D-10585 Berlin (DE)
(74) Vertreter: Epping, Wilhelm, Dr.-Ing.
(86) Internationale Anmeldenummer: EP9604278
(87) Internationale Veröffentlichungsnummer: WO9731345

(56) Entgegenhaltungen:
- EP-A- 0 052 771
- EP-A- 0 380 082
- EP-A- 0 577 170
- WO-A-79/00514
- DE-A- 3 741 704
- US-A- 4 274 500
- IBM TECHNICAL DISCLOSURE BULLETIN, Bd. 28, Nr. 6, November 1985, NEW YORK, US, Seiten 2361-2363, XP002009404 ANONYMOUS: "Keyboard Support Lifting Assembly With Locking Feature"
- IBM TECHNICAL DISCLOSURE BULLETIN, Bd. 34, Nr. 9, 1.Februar 1992, Seiten 77-78, XP000300606 "COMBINATION KEYPAD/SCALE USING STRAIN GAUGE TRANSDUCERS"

## Beschreibung

Die Erfindung betrifft eine Waage für Verkaufsgeschäfte nach dem Oberbegriff des Anspruchs 1.

An in Verkaufsgeschäften eingesetzte Waagen werden je nach Einsatzfall unterschiedliche Anforderungen hinsichtlich ihrer Ausstattung und Bedienbarkeit gestellt. Beispielsweise werden Selbstbedienungswaagen in Obst- und Gemüseabteilungen und Bedienwaagen von einer stehenden Person bedient, während eine Kassierperson in einem Verkaufsgeschäft eine einer Registrierkasse zugeordnete Checkout-Waage sitzend bedient. Dies bedingt unterschiedliche, einander zum Teil widersprechende ergonomische Gestaltungsprinzipien, die bisher mit einem einzigen Waagenaufbau nur unvollkommen befolgt werden.

Der Wunsch nach anwendungsindividueller Ausstattung bezieht sich auf die Eingabe- und Anzeigemittel, aber auch auf unterschiedliche Speicher- und Identifizierungsmedien wie Laufwerke für Disketten oder CD-ROM, Anschlüsse für elektronische, elektrooptische oder elektromechanische Massenspeicher beispielsweise nach dem PCMCIA-Standard sowie Leser für Magnetstreifen- oder Chipkarten, mit denen sich eine Bedienperson oder ein Servicetechniker bei der Waage identifiziert. Für jede Ausstattungsvariante müßte das Waagengehäuse verändert werden. Unterschiedliche Aufbauten verteuern aber eine Waage.

In den Druckschriften EP-A-0 380 082, US-A-4 274 500 und EP-A-0 052 771 ist jeweils eine Waage mit einer Elektronikbox beschrieben, deren Oberseite von einer Wägeplatte überdeckt ist und die eine Datenverarbeitungs- und Steuereinheit enthält. An die Vorderseite der Elektronikbox ist ein Vorbau angesetzt, dessen pultförmige Tastaturfläche mit einer Tastatur ausgestaltet ist.

Aufgabe der Erfindung ist es, einen Waagenaufbau vorzuschlagen, mit dem eine Waage für Verkaufsgeschäfte mit einfachen Maßnahmen unterschiedlichen Einsatzbedingungen anzupassen ist.

Die Aufgabe wird durch die Merkmale des Anspruchs 1 gelöst.

Die wahlweise Ausstattungsmöglichkeit mit unterschiedlichen Tastaturen oder auch mit einer kombinierten Anzeige/Eingabevorrichtung gestattet nicht nur einen anwendungsspezifischen Aufbau einer Waage für Verkaufsgeschäfte, sondern auch deren einfache nachträgliche Umrüstung, wenn eine Änderung der Anwendung oder neue Eingabegeräte dies erfordern. Beispielsweise eröffnet die Verwendung eines flachen Bildschirms mit einer sogenannten Touch Screen- oder einer PenComputer-Oberfläche oder mit Soft Keys neue Einsatzmöglichkeiten sowohl im bedienten als auch im Selbstbedienungsbereich.

So ermöglicht es die vorliegende Erfindung in einfacher Weise, beispielsweise an einer als Bedienwaage eingesetzten Waage eine schnell zu bedienende Tastatur mit relativ wenigen Tasten und fühlbarem Druckpunkt einzusetzen, die blind zu bedienen ist. Vor einer als Checkout-Waage eingesetzten Waage könnte die Registrierkassentastatur oder eine zu letzterer parallel betreibbare zweite Tastatur mit identischer Tastenausstattung fest angeordnet sein. An einer als Selbstbedienungswaage ist hingegen in besonders vorteilhafter Weise ein Touch Screen einsetzbar, auf dem die angebotenen Waren bildlich dargestelt werden. Eine Identifizierung des Wägeguts erfolgt durch einfache Berührung des entsprechenden Bildes auf dem Bildschirm. Wenn -wie dies in einer Weiterbildung des Erfindungsgedankens beschrieben ist- der Vorbau von der Elektronikbox lösbar ist, ergibt sich zusätzlich die Möglichkeit einer ergonomisch optimalen Anordnung der Tastatur bzw. der kombinierten Anzeige-/Eingabevorrichtung.

Ähnliche Möglichkeiten einer wahlweisen Ausstattung der Waage ergeben sich für Speichermittel, die nur sporadisch bedient werden müssen, wie z.B. Diskettenlaufwerke für das Laden von Programmen, CD-ROM-Laufwerke für den Betrieb eines PLU-Speichers, Chipkartenleser für die Bedienpersonen- oder Servicetechniker-Anmeldung, Massenspeicher nach dem PCMCIA-Standard für elektronische Journale, usw. Für den Einbau solcher Geräte ist jeweils ein Durchbruch im Waagenhäuse vorzusehen, wobei nicht belegte Durchbrüche aus Sicherheitsgründen verschlossen sein sollen. Die Überdeckung dieser Durchbrüche durch den nach unten abgebogenen Bereich der Tastaturfläche erfüllt diese Forderung. Zugleich werden die genannten Geräte dem Zugriff nicht autorisierter Personen entzogen.

Nachfolgend wird die Erfindung anhand in der Zeichnung dargestellter Ausführungsbeispiele beschrieben. Die Zeichnung zeigt in
- Figur 1: eine Waage für Verkaufsgeschäfte in perspektivischer Vorderansicht,
- Figur 2: die Waage aus Figur 1 ohne Tastatur in einer geschnittenen perspektivischen Teilansicht,
- Figur 3: die in Figur 1 gezeigte Waage mit Tastatur in zwei Positionen in einer schematische Seitenansicht,
- Figur 4: ein erstes Ausführungsbeispiel einer Tastaturflächen-Stützvorrichtung in Vorderansicht, (a) in heruntergeklappter, (b) in hochgeschwenkter Position,
- Figur 5: ein zweites Ausführungsbeispiel einer Tastaturflächen-Stützvorrichtung in geschnittener Seitenansicht, (a) in heruntergeklappter, (b) in hochgeschwenkter Position,
- Figur 6: eine Verriegelungseinrichtung für eine Tastaturfläche in schematischer Seitenansicht.

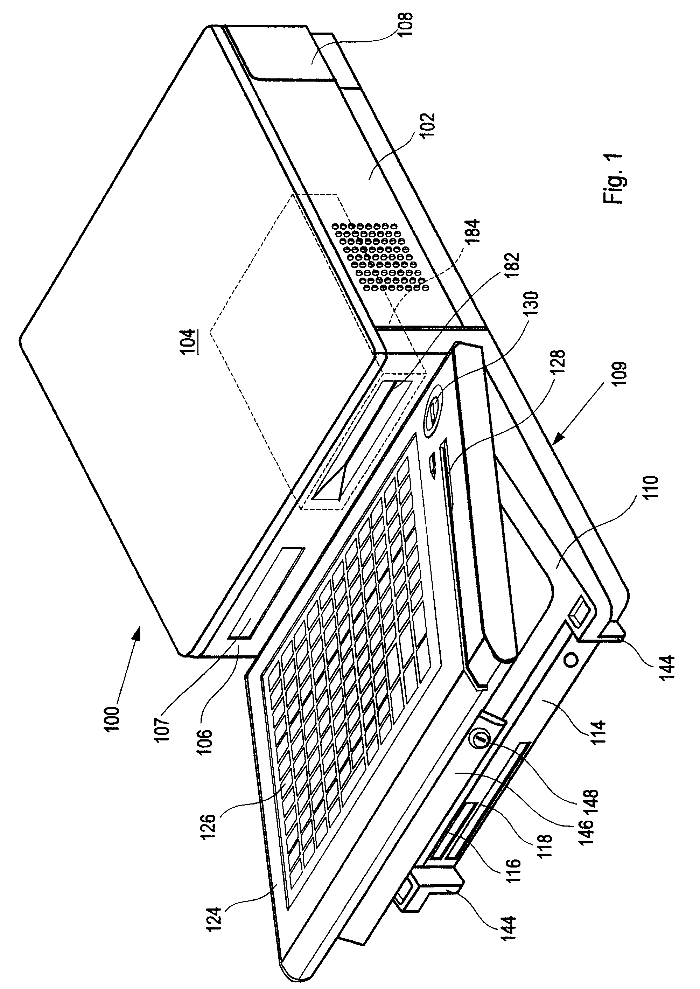

In Figur 1 ist eine Waage 100 für Verkaufsgeschäfte in perspektivischer Vorderansicht dargestellt. Diese besteht aus einer Elektronikbox 102, deren Oberseite von einer Wägeplatte 104 überdeckt ist. Eine einem Benutzer zugekehrte Informationswand 106 der Waage 100 ist mit einer Anzeigevorrichtung 107 bestückt. Neben dieser ist ein Druckgut-Auslaß 182 eines in die Elektronikbox 102 eingebauten Druckers 184 in die Informationswand 106 eingelassen. Der hintere Bereich der Waage 100 ist durch eine lösbare Kabelabdeckung 108 verschlossen.

Vor der Elektronikbox 102 ist ein Vorbau 109 angeordnet, dessen Oberseite 110 schräg nach vorne abfällt. Der Vorbau 109 ist lösbar mit der Elektronikbox 102 verbunden. Dies hat den Vorteil, daß die Elektronikbox 102 und der Vorbau 109 je nach Einsatzfall der Waage 100 auch auseinandergerückt werden können. Der Vorbau 109 kann aber auch integraler Bestandteil der Elektronikbox 102 sein. Die Informationswand 106 der Waage 100 ist dem Vorbau 109 zugeordnet. Sie kann aber auch Teil der Elektronikbox 102 sein.

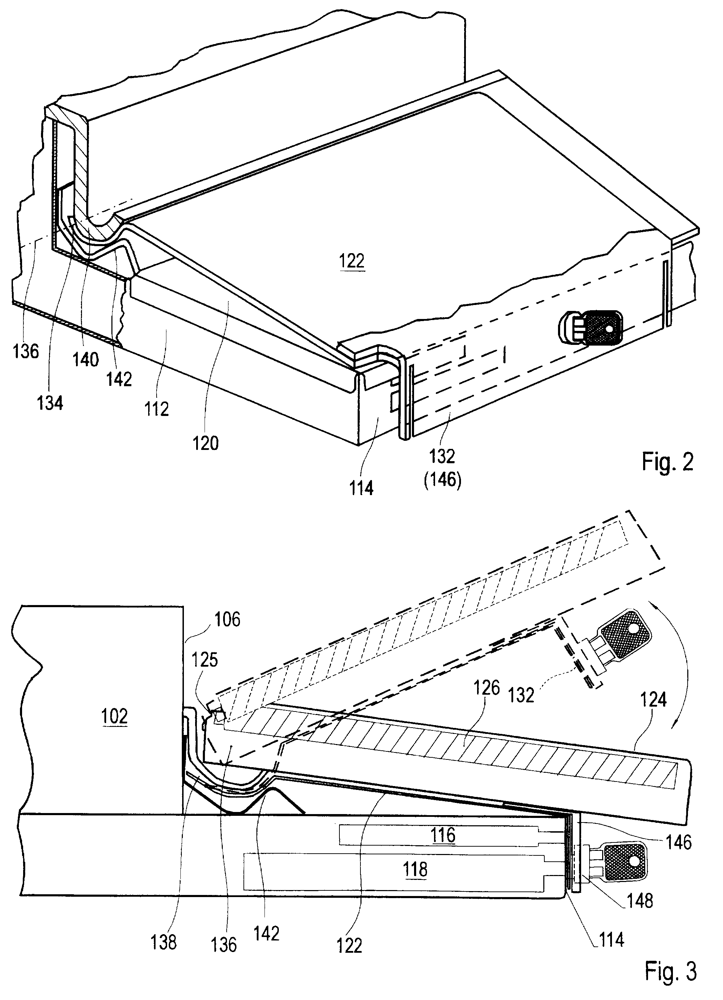

Der Vorbau 109 umschließt ein Gehäuse 112 (Figur 2) aus Metall, in dessen senkrecht abfallende Vorderwand 114 ein Chipkartenleser 116 und ein Diskettenlaufwerk 118 eingebaut sind. Die Oberseite des Gehäuses 112 bildet ein Deckblech 120, über dem eine ebenfalls aus Blech gefertigte Tastaturfläche 122 schwenkbar angeordnet ist. Auf dieser ist ein Tastaturgehäuse 124 befestigt, in dem eine Tastatur 126, ein Durchzug-Magnetkartenleser 128 und ein Serviceschloß 130 untergebracht sind. Letzteres ist mit einer an sich bekannten und deshalb nicht dargestellten Schalteinrichtung verbunden, die in einer Servicestellung einen Mitarbeiter oder beauftragten Servicetechniker des Verkaufsgeschäftes gegenüber einer ebenfalls nicht dargestellten Steuereinrichtung der Waage 100 identifiziert.

Ein vorderer, das Gehäuse 112 überragender Bereich 132 der Tastaturfläche 122 ist nach unten abgebogen, so daß er vor der Vorderwand 114 des Gehäuses 112 zu liegen kommt und diese vollständig überdeckt. Der hintere Bereich der Tastaturfläche 122 ist nach unten zu einer über deren gesamte Breite verlaufenden Kehle 134 mit kreisabschnittförmigem Querschnitt gebogen. Die Mittellinie der Kehle 134 fällt mit einer Schwenkachse 136 zusammen, um die die Tastaturfläche 122 schwenkbar ist. Die Kehle 134 wird in einem Spalt 138 zwischen dem Deckblech 120 und einer an die Informationswand 106 angeformten Rippe 140 geführt, deren Berührungsfläche mit der Tastaturfläche 122 an die Kreisabschnittsform der Kehle 134 angepaßt ist. Im Berührungsbereich der Kehle 134 kann das Deckblech 120 eben sein. Eine noch bessere Führung der Schwenkbewegung der Tastaturfläche 122 um die Schwenkachse 136 ergibt sich aber, wenn das Deckblech 120 in diesem Bereich zu einer Welle 142 geformt ist (Figuren 2 und 3). Die Kehle 134 liegt dabei in einem Wellental. Zwischen der Tastaturfläche 122 und dem Deckblech 120 besteht in jeder Schwenkposition ein großflächiger galvanischer Kontakt, so daß die Verbindung der Tastaturfläche 122 mit dem Massepotential des Gehäuses 112 stets gewährleistet ist.

Figur 3 zeigt die Tastaturfläche 122 mitsamt dem auf ihr befestigten Tastaturgehäuse 124 in einer mit durchgezogenen Linien dargestellten heruntergeklappten Position und einer gestrichelt dargestellten hochgeschwenkten Position. Der vordere Bereich 132 der Tastaturfläche 122 überdeckt in der erstgenannten Position die Vorderwand 114 und verhindert damit den Zugriff zu dem in diese eingebauten Chipkartenleser 116 und zu dem Diskettenlaufwerk 118. Figur 3 zeigt ferner, daß die Schwenkachse 136 der Tastaturfläche 122 so weit vor der Informationswand 106 liegt, daß die Hinterkante 125 des Tastaturgehäuses 124 in keiner Position mit der Informationswand 106 oder mit in diese eingebauten Elementen kollidiert.

Der vordere Bereich 132 der -heruntergeklappten- Tastaturfläche 122 liegt zwischen Vorsprüngen 144, die vorne an den Vorbau 102 angeformt sind (Figur 1). Eine auf den vorderen Bereich 132 aufgesetzte Blende 146 (Figur 3) schließt nach vorne bündig mit den Vorsprüngen 144 ab, so daß sich ein Gerät ohne störende Versprünge ergibt. In die Blende 146 ist ein auch den vorderen Bereich 132 der Tastaturfläche 122 durchsetzendes Schloß 148 eingebaut, mit dem die Tastaturfläche 122 mit der Vorderwand 114 zusammenschließbar ist. Ein unbefugter Zugriff auf den Chipkartenleser 116 oder das Diskettenlaufwerk 118 ist damit zuverlässig zu verhindern.

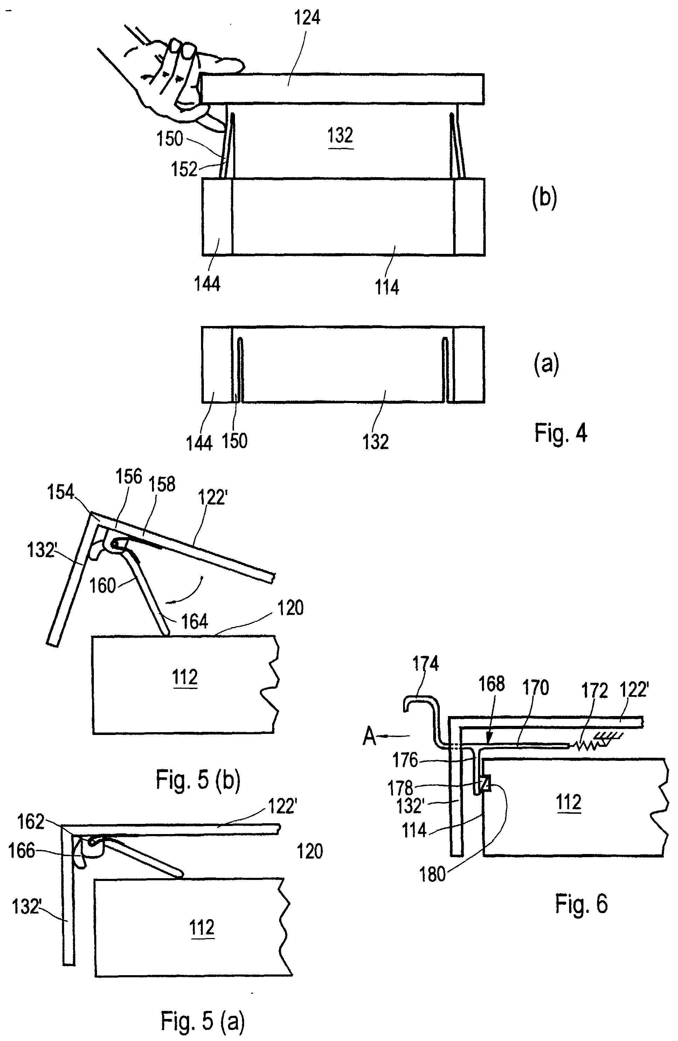

In den Figuren 4 und 5 sind zwei unterschiedliche Ausführungsbeispiele einer Stützeinrichtung für die Tastaturfläche 122 dargestellt. Durch diese wird einerseits die Tastaturfläche 122 in ihrer hochgeschwenkten Position gehalten, so daß in die Vorderwand 114 des Gehäuses 112 eingebaute Geräte -in dem Ausführungsbeispiel nach Figur 1 sind dies der Chipkartenleser 116 und das Diskettenlaufwerk 118- bequem bedient werden können. Andererseits wird beim Herunterklappen ein hartes Aufschlagen der Tastaturfläche 122 auf das Gehäuse 112, welches z.B. zur Zerstörung eines ebenfalls in das Gehäuse 112 eingebauten Magnetplattenlaufwerks führen könnte, vermieden.

Figur 4 zeigt ein erstes Ausführungsbeispiel einer Stützvorrichtung für die Tastaturfläche 122 (a) in heruntergeklappter, und (b) in hochgeschwenkter Position. An die Seitenkanten des vorderen, abgebogenen Bereichs 132 der Tastaturfläche 122 ist jeweils eine unter einem Winkel von ca. 10° schräg zur Seite abstehende Stütze 150 angeformt. Bei hochgeklappter Tastaturfläche 122 stützt sich deren unteres Ende 152 auf dem benachbarten Vorsprung 144 ab. Zum Herunterklappen der Tastaturfläche 122 hat die Bedienperson mit beiden Händen (in Figur 4b für eine Seite dargestellt) das darauf befestigte Tastaturgehäuse 124 seitlich zu ergreifen und mit einem freien Finger die Stützen 150 aufeinander zu zu drücken, bis diese parallel zu dem benachbarten Vorsprung 144 ausgerichtet sind. Danach kann die Tastaturfläche 122 nach unten geführt werden. Die Stützen 150 gleiten beim Herunterschwenken an den Vorsprüngen 144 unter einem erhöhten Reibungswiderstand entlang, der sich unter der Wirkung einer elastischen Rückstellkraft der seitlich gebogenen Stützen einstellt. Dadurch ist ein stoßarmer Übergang der Tastaturfläche 122 von der hochgeschwenkten in die heruntergeklappte Position (Figur 4a) gewährleistet.

Figur 5 zeigt ein zweites Ausführungsbeispiel einer Stützvorrichtung für eine Tastaturfläche 122' (a) in heruntergeklappter, und (b) in hochgeschwenkter Position. An die dem Gehäuse 112 zugewandte Seite der Tastaturfläche 122' ist in der Nähe der Biegekante 154, um welche der vordere Bereich 132' der Tastaturfläche 122' nach unten abgebogen ist, rechts und links eine Lasche 156 angeformt. An diesen ist jeweils ein in Richtung des Gehäuses 112 mit der Kraft einer Schenkelfeder 158 beaufschlagter zweiarmiger Stützhebel 160 gelagert, welcher um eine parallel zu der Schwenkachse 136 der Tastaturfläche 122' ausgerichtete Achse 162 schwenkbar ist. Ein erster Schenkel 164 des Stützhebels 160 stützt sich auf dem Deckblech 120 des Gehäuses 112 ab, der zweite Schenkel 166 ist nach unten abgebogen. Die Schenkel 164, 166 schließen einen Winkel von ca. 60° ein.

In ihrer heruntergeklappten Position (Figur 5a) wird die Tastaturfläche 122' von einer weiter unten beschriebenen Verriegelung 168 (Figur 6) gehalten. Wird diese Verriegelung gelöst, richtet sich der Stützhebel 160 unter der Antriebskraft der Schenkelfeder 158 auf und bringt dabei die Tastaturfläche 122' in ihre hochgeschwenkte Position (Figur 5b), ohne daß diese von Hand angehoben werden müßte. In dieser Stellung stützt sich der zweite Schenkel 166 an dem vorderen Bereich 132' der Tastaturfläche 122' ab und begrenzt damit den Schwenkbereich des Stützhebels 160. Zum Herunterklappen wird die Tastaturfläche 122' manuell nach unten gedrückt. Das untere Ende des ersten Stützhebel-Schenkels 164 gleitet dabei unter gleichzeitiger Spannung der Schenkelfeder 158 auf dem Deckblech 120 entlang. Diese Anordnung gewährleistet wie bei dem Ausführungsbeispiel der Stützvorrichtung nach Figur 4 ebenfalls einen stoßarmen Übergang der Tastaturfläche 122' von der hochgeschwenkten in die heruntergeklappte Position (Figur 5a). Sie hat darüber hinaus den Vorteil einhändiger Bedienbarkeit.

Figur 6 zeigt die Verriegelung 168 für die Tastaturfläche 122' in geschnittener Seitenansicht. Sie enthält auf der dem Gehäuse 112 zugewandten Seite der Tastaturfläche 122' einen parallel zu dieser ausgerichteten längsverschieblichen Schieber 170. Der Schieber 170 durchdringt den vorderen Bereich 132' der Tastaturfläche 122', wo er mit einer Handhabe 174 versehen ist. Auf der Innenseite des vorderen Bereichs 132' ist an den Schieber 170 eine nach unten weisende Zunge 176 angeformt, an deren unterem Ende ein hakenförmiger Rastvorsprung 178 ausgebildet ist. Dieser greift in seiner Verriegelungsstellung in eine Rastausnehmung 180 in der Vorderwand 114 des Gehäuses 112 ein. Der Schieber 170 ist mit einer in Richtung des Gehäuses 112 gerichteten Stellkraft einer Zugfeder 172 beaufschlagt. Zum Entriegeln wird der Schieber 170 in Richtung des Pfeils A bewegt. Der Rastvorsprung 178 kommt außer Eingriff mit der Rastausnehmung 180 und die Tastaturfläche kann nach oben schwingen.

## Patentansprüche

1. Waage (100) mit einer Elektronikbox (102), deren Oberseite von einer Wägeplatte (104) überdeckt ist und die eine Datenverarbeitungs- und Steuereinheit enthält, mit einem Bedienbereich (114, 124) und einem Anzeigebereich (106), **gekennzeichnet** durch folgende Merkmale:
an die Vorderseite der Elektronikbox (102) ist ein Vorbau (109) angesetzt, dessen pultförmige Tastatur fläche (122) wahlweise mit einer Tastatur (126) oder einer kombinierten Anzeige-/Eingabevorrichtung ausstattbar ist,
in einer senkrechten Vorderwand (114) eines unterhalb der Tastaturfläche (122) liegenden Gehäuses (112) ist wenigstens ein Chipkartenleser (116) und/oder ein Ausweisleser und/oder ein Diskettenlaufwerk (118) und/oder ein Laufwerk für optische Speichermedien und/oder eine Kartenaufnahme nach dem PCMCIA-Standard einbaubar,
ein vorderer Bereich (132) der Tastaturfläche (122) ist nach unten abgebogen,
die Tastaturfläche (122) ist an dem Vorbau (109) der Waage (100) um eine bei der Hinterkante der Tastaturfläche (122) und parallel zu dieser verlaufende Schwenkachse (136) zwischen einer Position, in der der vordere, abgebogene Bereich (132) der Tastaturfläche (122) die senkrechte Vorderwand (114) übergreift, und. einer diese freigebenden Position schwenkbar gelagert.

2. Anordnung nach Anspruch 1, bei der der vordere, nach unten abgebogene Bereich (132) bei heruntergeklappter Tastaturfläche (122) zwischen Vorsprüngen (144) liegt, die die Vorderwand (114) seitlich begrenzen.

3. Anordnung nach Anspruch 2, bei der wenigstens an eine Seitenkante des vorderen, abgebogenen Bereichs (132) der Tastaturfläche (122) eine bei heruntergeklappter Tastaturfläche (122) parallel zu dem benachbarten Vorsprung (144) verlaufende Stütze (150) angeordnet ist, die sich bei hochgeklappter Tastaturfläche (122) unter der Wirkung einer elastischen Federkraft seitlich von dem abgebogenen Bereich (132) abspreizt, wonach sich deren unteres Ende auf dem benachbarten Vorsprung (144) abstützt.

4. Anordnung nach Anspruch 1 oder 2, bei der an die Unterseite der Tastaturfläche (122) wenigstens ein in Richtung des Gehäuses (112) mit der Kraft einer Feder (158) beaufschlagter Stützhebel (160) angelenkt ist, welcher um eine parallel zu der Schwenkachse (136) der Tastaturfläche (122) ausgerichtete Achse (162) schwenkbar ist, und dessen einer Schenkel (164) sich auf dem Deckblech (120) des Gehäuses (112) abstützt.

5. Anordnung nach einem der Ansprüche 1 bis 4, bei der die Tastaturfläche (122) in ihrer heruntergeklappten Position mit dem Gehäuse (112) verrastbar oder auch abschließbar ist.

6. Anordnung nach einem der Ansprüche 1 bis 5, mit einem in die Elektronikbox (102) eingebauten Drucker, der das Druckgut durch die dem Vorsatz (109) zugewandte Seitenwand ausgibt.

7. Anordnung nach einem der Ansprüche 1 bis 6 mit einer hinter der Tastaturfläche (122) befindlichen Informationswand (106), in die eine Anzeigevorrichtung (107) und/oder ein Druckgut-Auslaß (182) eines Druckers (184) eingebaut ist.

8. Anordnung nach einem der Ansprüche 1 bis 7, bei der der Vorbau (109) integraler Bestandteil der Elektronikbox (102) ist.

9. Anordnung nach einem der Ansprüche 1 bis 7, bei der der Vorbau (109) und die Elektronikbox (102) voneinander lösbar sind.

10. Anordnung nach Anspruch 9, bei der die Informationswand (106) Teil des Vorbaus (109) ist.

11. Anordnung nach Anspruch 9, bei der die Informationswand (106) Teil der Elektronikbox (102) ist.

12. Anordnung nach einem der Ansprüche 1 bis 11, bei der die Schwenkachse (136) der Tastaturfläche (122) in einer solchen Entfernung von der Informationswand (106) angeordnet ist, daß die Hinterkante (125) eines die Tastaturfläche (122) überragenden Tastaturgehäuses (124) bei hochgeklappter Tastaturfläche (122) nicht mit der Informationswand (106) oder mit einer in diese einegebauten Anzeigevorrichtung (107) oder einem in die Informationswand (106) eingebauten Druckgut-Auslaß (182) kollidiert.

13. Anordnung nach Anspruch 12, bei der die Tastaturfläche (122) aus Blech gefertigt und um die Schwenkachse (136) zu einer kreisabschnittförmigen Kehle (134) gebogen ist, wobei letztere in einem Spalt (138) verschwenkbar geführt ist, der zwischen dem Deckblech (120) des Gehäuses (112) und einer an den Vorbau (109) angeformten Rippe (140) ausgebildet ist.

## Claims

1. Scales (100) having an electronics box (102) whose topside is covered by a weighing plate (104), and which contains a data processing and control unit, and having an operating area (114, 124) and a display area (106), characterized by the following features:
attached to the front side of the electronics box (102) is a projecting structure (109) whose console-shaped keypad surface (122) can optionally be equipped with a keypad (126) or a combined display/input device,
at least one chipcard reader (116) and/or one identity card reader and/or one floppy disk drive (118) and/or one drive for optical memory media and/or one card receptacle conforming to the PCMCIA standard can be installed in a vertical front wall (114) of a housing (112) situated below the keypad surface (122),
a front area (132) of the keypad surface (122) is bent away downwards, and
the keypad surface (122) is mounted on the projecting structure (109) of the scales (100) so that it can pivot about a pivot axis (136), which extends at the rear edge of the keypad surface (122) and parallel thereto, between a position in which the front, bent-away area (132) of the keypad surface (122) latches over the vertical front wall (114), and a position which exposes the latter.

2. Arrangement according to Claim 1, in which, with the keypad surface (122) folded down, the front, downwardly bent-away area (132) is situated between projections (144) which laterally bound the front wall (114).

3. Arrangement according to Claim 2, in which, at least at a side edge of the front, bent-away area (132) of the keypad surface (122), a support (150) is arranged which, with the keypad surface (122) folded down, extends parallel to the adjacent projection (144) and, with the keypad surface (122) folded up, spreads away laterally from the bent-away area (132) under the action of an elastic spring force, its lower end being supported on the adjacent projection (144).

4. Arrangement according to Claim 1 or 2, in which pivoted to the underside of the keypad surface (122) is at least one support lever (160) to which the force of a spring (158) is applied in the direction of the housing (112), which can be pivoted about a spindle (162) aligned parallel to the pivot axis (136) of the keypad surface (122), and whose one limb (164) is supported on the cover plate (120) of the housing (112).

5. Arrangement according to one of Claims 1 to 4, in which the keypad surface (122) can be latched or else locked with the housing (112) in its folded-down position.

6. Arrangement according to one of Claims 1 to 5, having a printer which is installed in the electronics box (102) and outputs the printed matter through the side wall facing the projecting structure (109).

7. Arrangement according to one of Claims 1 to 6, having an information wall (106) which is located behind the keypad surface (122) and in which there is installed a display device (107) and/or a printed matter outlet (182) of a printer (184).

8. Arrangement according to one of Claims 1 to 7, in which the projecting structure (109) is an integral component of the electronics box (102).

9. Arrangement according to one of Claims 1 to 7, in which the projecting structure (109) and the electronics box (102) can be detached from one another.

10. Arrangement according to Claim 9, in which the information wall (106) is part of the projecting structure (109).

11. Arrangement according to Claim 9, in which the information wall (106) is part of the electronics box (102).

12. Arrangement according to one of Claims 1 to 11, in which the pivot axis (136) of the keypad surface (122) is arranged at a distance from the information wall (106) such that with the keypad surface (122) folded up, the rear edge (125) of a keypad housing (124) projecting beyond the keypad surface (122) does not collide with the information wall (106) or with a display device (107) installed therein or with a printed matter outlet (182) installed in the information wall (106).

13. Arrangement according to Claim 12, in which the keypad surface (122) is made from sheet metal and is bent about the pivot axis (136) into a groove (134) in the shape of a circular segment, said groove being guided pivotably in a gap (138) which is constructed between the cover plate (120) of the housing (112) and a rib (140), which is integrally formed on the projecting structure (109).

## Revendications

1. Balance (100), comportant une boîte (102) électronique, dont le dessus est recouvert par un plateau (104) de pesage et qui contient une unité de commande et de traitement de données, et comportant une zone (114, 124) de commande et une zone (106) d'affichage, caractérisée par les caractéristiques suivantes :
un avant-corps (109) est mis en place sur le côté avant de la boîte électronique (102), avant-corps dont la surface (122) pour clavier en forme de pupitre peut être équipée au choix d'un clavier (126) ou d'un dispositif combiné d'affichage et d'entrée,
au moins un lecteur (116) de cartes à puce et/ou un lecteur de badges et/ou un lecteur (118) de disquettes et/ou un lecteur pour des supports d'enregistrement optique et/ou un récepteur de cartes au standard PCMCIA peut être incorporé dans une paroi (114) avant verticale d'un boîtier (112) situé en dessous de la surface (122) pour clavier,
une région (132) avant de la surface (122) pour clavier est recourbée vers le bas,
la surface (122) pour clavier est montée sur l'avant-corps (109) de la balance (100) à pivotement, autour d'un axe (136) de pivotement s'étendant sur le bord arrière de la surface (122) pour clavier et parallèlement à cette dernière, entre une position dans laquelle la région (132) avant recourbée de la surface (122) pour clavier recouvre la paroi (114) avant verticale, et une position dégageant cette paroi.

2. Agencement suivant la revendication 1, dans lequel la région (132) avant recourbée vers le bas se trouve, lorsque la surface (122) pour clavier est rabattue, entre des saillies (144) qui délimitent latéralement la paroi (114) avant.

3. Agencement suivant la revendication 2, dans lequel un montant (150) de soutien est disposé sur au moins un bord latéral de la région (132) avant recourbée de la surface (122) pour clavier, montant qui s'étend parallèlement à la saillie (144) voisine lorsque la surface (122) pour clavier est rabattue et qui, lorsque la surface (122) pour clavier est relevée, s'écarte latéralement de la région (132) recourbée sous l'action d'une force de ressort élastique, à la suite de quoi son extrémité inférieure s'appuie sur la saillie (144) voisine.

4. Agencement suivant la revendication 1 ou 2, dans lequel au moins un levier (160) de soutien, sollicité en direction du boîtier (112) par la force d'un ressort (158), est articulé sur le dessous de la surface (122) pour clavier, levier qui peut être pivoté autour d'un axe (162) orienté parallèlement à l'axe (136) de pivotement de la surface (122) pour clavier, et dont une branche (164) s'appuie sur la tôle (120) de recouvrement du boîtier (112).

5. Agencement suivant l'une des revendications 1 à 4, caractérisé en ce que la surface (122) pour clavier peut, dans sa position rabattue, être enclenchée sur le boîtier (112) ou aussi verrouillée.

6. Agencement suivant l'une des revendications 1 à 5, comprenant une imprimante incorporée dans la boîte électronique (102), qui délivre le produit imprimé par la paroi latérale tournée vers l'avant-corps (109).

7. Agencement suivant l'une des revendications 1 à 6, comprenant une paroi (106) d'information, qui se trouve derrière la surface (122) pour clavier et dans laquelle est incorporé un dispositif (107) d'affichage et/ou une sortie (182) de produit imprimé d'une imprimante (184).

8. Agencement suivant l'une des revendications 1 à 7, dans lequel l'avant-corps (109) fait partie intégrante de la boîte électronique (102).

9. Agencement suivant l'une des revendications 1 à 7, dans lequel l'avant-corps (109) et la boîte électronique (102) peuvent être détachés l'un de l'autre.

10. Agencement suivant la revendication 9, dans lequel la paroi (106) d'information fait partie de l'avant-corps (109).

11. Agencement suivant la revendication 9, dans lequel la paroi (106) d'information fait partie de la boîte électronique (102).

12. Agencement suivant l'une des revendications 1 à 11, dans lequel l'axe (136) de pivotement de la surface (122) pour clavier est disposé à une distance telle de la paroi (106) d'information que le bord (125) arrière d'un boîtier (124) de clavier dépassant de la surface (122) pour clavier n'entre pas en collision, lorsque la surface (122) pour clavier est relevée, avec la paroi (106) d'information ou avec un dispositif (127) d'affichage incorporé dans cette paroi ou une sortie (182) de produit imprimé incorporée dans la paroi (106) d'information.

13. Agencement suivant la revendication 12, dans lequel la surface (122) pour clavier est réalisée en tôle et est recourbée autour de l'axe (136) de pivotement en une gorge (134) en forme de segment de cercle, cette dernière étant guidée à pivotement dans une fente (138) qui est formée entre la tôle (120) de recouvrement du boîtier (112) et une nervure (140) formée sur l'avant-corps (109).
